# EUROPÄISCHE PATENTSCHRIFT

(11) **EP 3 538 977 B1**
(45) Veröffentlichungstag und Bekanntmachung des Hinweises auf die Patenterteilung: **09.03.2022**
(21) Anmeldenummer: 17784949.4
(22) Anmeldetag: 17.10.2017
(51) Int. Cl.: G06F 3/0481, B60K 35/00, B60K 37/06

(54) **VERFAHREN ZUM BETREIBEN EINES BEDIENSYSTEMS UND BEDIENSYSTEM**
METHOD FOR OPERATING AN OPERATING SYSTEM, AND OPERATING SYSTEM
PROCÉDÉ DE FONCTIONNEMENT D'UN SYSTÈME DE COMMANDE UTILISATEUR ET SYSTÈME DE COMMANDE UTILISATEUR

(30) Priorität: 10.11.2016 DE 102016121561
(43) Veröffentlichungstag der Anmeldung: 18.09.2019
(73) Patentinhaber: Volkswagen Aktiengesellschaft, 38440 Wolfsburg (DE)
(72) Erfinder: KUHN, Mathias, 14129 Berlin (DE); KÖGLER, Indra-Lena, 10829 Berlin (DE); CHUDZINSKI, Filip Piotr, 20255 Hamburg (DE)
(74) Vertreter: Reitstötter Kinzebach
(86) Internationale Anmeldenummer: PCT/EP2017/076454
(87) Internationale Veröffentlichungsnummer: WO 2018/086826

(56) Entgegenhaltungen:
- EP-A1- 2 924 551
- DE-A1-102007 039 444
- DE-A1-102008 034 507
- DE-A1-102010 020 893
- US-A1- 2011 164 042
- US-A1- 2014 201 653

## Beschreibung

Die vorliegende Erfindung betrifft ein Verfahren zum Betreiben eines Bediensystems, bei dem eine grafische Bedienoberfläche erzeugt und angezeigt wird, wobei die grafische Bedienoberfläche eine erste Darstellung mit einer Vorderseitendarstellung eines flächigen grafischen Objekts umfasst. Eine Bedienaktion für das grafische Objekt wird erfasst sowie eine Übergangsanimation erzeugt und angezeigt. Ferner wird im Anschluss an die Übergangsanimation eine zweite Darstellung mit einer Rückseitendarstellung des grafischen Objekts angezeigt. Dabei umfasst die Übergangsanimation eine perspektivisch dargestellte Rotation des grafischen Objekts um eine Achse und die Rückseitendarstellung des grafischen Objekts nimmt eine geringere Fläche als die Vorderseitendarstellung ein. Die Erfindung betrifft ferner ein Bediensystem in einem Fahrzeug, mit einer Steuereinheit, durch die eine grafische Bedienoberfläche erzeugbar ist. Dabei umfasst die grafische Bedienoberfläche eine erste Darstellung mit einer Vorderseitendarstellung eines flächigen grafischen Objekts. Das Bediensystem umfasst ferner eine Anzeigefläche, durch welche die grafische Bedienoberfläche anzeigbar ist, und eine Erfassungseinheit, durch die eine Bedienaktion für das grafische Objekt erfassbar ist. Dabei ist ferner eine Übergangsanimation erzeugbar und anzeigbar, wobei im Anschluss an die Übergangsanimation eine zweite Darstellung mit einer Rückseitendarstellung des grafischen Objekts anzeigbar ist. Dabei umfasst die Übergangsanimation eine perspektivisch dargestellte Rotation des grafischen Objekts um eine Achse und die Rückseitendarstellung des grafischen Objekts nimmt eine geringere Fläche als die Vorderseitendarstellung ein.

Die zunehmende Integration elektronischer Einrichtungen im modernen Alltag, insbesondere auch in Kraftfahrzeugen, führt zu einem großen Bedarf an Möglichkeiten, Informationen anzuzeigen und dem Nutzer Eingaben und Bedienmöglichkeiten zur Verfügung zu stellen. Dies erfolgt insbesondere mithilfe von Anzeigen und Touchscreens, die mittlerweile aufgrund von sinkenden Kosten und Fortschritten bei der technischen Entwicklung zunehmend größer dimensioniert werden. Sie erlauben nicht nur die Ausgabe von Daten für verschiedene Einrichtungen, sondern auch deren Steuerung durch die Erfassung von Nutzereingaben. Beispielsweise werden, um verschiedene elektronische Einrichtungen bedienen zu können, vielfach Multifunktionsbediensysteme eingesetzt, welche eine oder mehrere Multifunktionsanzeigen und Bedienelemente umfassen, mit denen verschiedene Einrichtungen bedient werden können und die häufig weitreichende Konfigurationsmöglichkeiten zulassen. Die Bedienung wird dabei durch die auf der Multifunktionsanzeige wiedergegebene Information unterstützt beziehungsweise geführt. Ferner kann über ein solches Bediensystem ausgewählt werden, welche Informationen auf der Multifunktionsanzeige angezeigt werden sollen.

In der US 2013/0194308 A1 wird eine Bedienoberfläche beschrieben, bei der ein Widget mehrere virtuelle Seiten aufweist. Durch Drehen des Widgets können Bedingungen für unterschiedliche Funktionen auf verschiedenen Seiten dargestellt werden.

Ferner schlägt die EP 2 924 551 A1 ein Verfahren zum Bereitstellen einer grafischen Benutzerschnittstelle vor, bei dem eine Bedienoberfläche mit Kacheln ausgegeben wird. Eine solche Kachel der Bedienoberfläche kann gedreht werden, um zu einem Einstellungsmenü zu gelangen. US2011/164041 A1 offenbart eine grafische Benutzeroberfläche für einen Medienplayer, bei der zwischen einer Vorderseitenansicht und einer Rückseitenansicht eines Album-Objekts gewechselt werden kann.

Dabei stellt sich bei bekannten Systemen das Problem, die Vielzahl der darstellbaren Informationen und Bedienmöglichkeiten sinnvoll und übersichtlich gegliedert bereitzustellen sowie eine einfache Vornahme von Einstellungen zu gewährleisten.

Der vorliegenden Erfindung liegt die Aufgabe zugrunde, ein Verfahren zum Betreiben eines Bediensystems und ein Bediensystem bereitzustellen, die eine besonders einfache Bedienung, insbesondere zur Erfassung von Einstellungen, erlauben.

Erfindungsgemäß wird diese Aufgabe durch ein Verfahren mit den Merkmalen des Anspruchs 1 und ein Bediensystem mit den Merkmalen des Anspruchs 11 gelöst. Vorteilhafte
Ausgestaltungen und Weiterbildungen ergeben sich aus den abhängigen Ansprüchen.

Das erfindungsgemäße Verfahren zeichnet sich dadurch aus, dass während der
Übergangsanimation die Darstellung des grafischen Objekts verkleinert wird und die zweite Darstellung ferner einen Informationsbereich umfasst.

Bei dem Verfahren können auf vorteilhafte Weise zwei verschiedene Seiten des flächigen Objekts angezeigt werden, wobei unterschiedliche Informationen ausgegeben und unterschiedliche Bedienmöglichkeiten bereitgestellt werden können. Insbesondere kann dabei ein inhaltlicher Zusammenhang zwischen den auf den beiden Seiten ausgegebenen Daten deutlich dargestellt werden.

Außerdem wird vorteilhafterweise die Fläche verringert, welche die Rückseitendarstellung des grafischen Objekts im Anschluss an die Übergangsanimation aufweist, und es kann eine freie Fläche gebildet werden, in der weitere Elemente der Anzeige vorgesehen sein können.

Durch den Informationsbereich wird zudem vorteilhafterweise eine Fläche bereitgestellt, die zur Ausgabe von Informationen genutzt werden kann.

Die Grundidee der vorliegenden Erfindung beruht auf dem Konzept einer 2-Seiten-Logik. Dabei existiert zu einer ersten Seite eine zweite Seite, auf der nach einem bestimmten Kriterium verschiedene Informationen zur Anzeige gebracht werden können. Im Allgemeinen kann die erste Seite auch gleichbedeutend als Vorderseite und die zweite Seite als Rückseite bezeichnet werden, wobei zu einer Vorderseite die Rückseite auf mehrere verschiedene Weisen gebildet werden kann. Die Zusammengehörigkeit der beiden Seiten wird durch die Darstellung eines flächigen grafischen Objekts verdeutlicht, wobei ein virtuelles Objekt dargestellt wird, das praktisch keine Dicke, sondern lediglich eine flächige Ausdehnung aufweist.

Das flächige grafische Objekt, insbesondere seine Vorderseite, kann als Anzeigefenster, insbesondere als sogenannte "Kachel", oder Widget-Objekt ausgebildet sein. Es erstreckt sich über einen Bereich der Anzeigefläche, wobei es insbesondere die gesamte Anzeigefläche einnehmen kann. Bei dem erfindungsgemäßen Verfahren kann die grafische Bedienoberfläche insbesondere mehrere flächige grafische Objekte umfassen, wobei auf der Anzeigefläche mehrere grafische Objekte zugleich dargestellt werden, beispielsweise mehrere Kacheln oder Widget-Objekte.

Unter einem "Widget-Objekt" wird im Sinne der Erfindung ein Objekt verstanden, welches graphisch auf der Anzeigefläche dargestellt wird und welches einer Anwendung zugeordnet ist, die zum Beispiel von einer Einrichtung eines Fahrzeugs ausgeführt wird. Ein Widget-Objekt kann insbesondere in einem kleinen Bereich der Anzeigefläche Informationen einer Einrichtung anzeigen, die laufend aktualisiert werden. Beispielsweise können von einem Widget-Objekt in einem Fahrzeug Routeninformationen eines Navigationssystems, aktuelle Meldungen zum Wetter, zum Straßenzustand und zum Verkehrszustand angezeigt werden sowie Informationen zu Multimedia- und/oder Kommunikationseinrichtungen. Das Widget-Objekt wird insbesondere unabhängig vom weiteren Anzeigeinhalt der Anzeigefläche dargestellt. Erfolgt die Darstellung eines Widget-Objekts als Anzeigefenster, können auch grafische Objekte in dem Anzeigefenster wiederum Widget-Objekte sein. Dabei hat der Nutzer über das Anzeigefenster Zugang zu anderen Widget-Objekten.

Die Erfassung der Bedienaktion für das grafische Objekt erfolgt dabei auf an sich bekannte Weise, wobei insbesondere eine berührungsempfindliche Oberfläche eines Touchscreens vorgesehen ist. Der Touchscreen umfasst eine Anzeigefläche und eine darüber angeordnete berührungsempfindliche Oberfläche, beispielsweise eine Folie, mit welcher die Position einer Berührung eines Betätigungsobjekts, insbesondere einer Fingerspitze eines Nutzers, detektiert werden kann. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche angezeigten grafischen Objekt zugeordnet werden.

Da erfindungsgemäß die Rückseitendarstellung des grafischen Objekts eine geringere Fläche als die Vorderseitendarstellung einnimmt, kann die zweite Darstellung so gebildet werden, dass durch die im Vergleich zur ersten Darstellung kleinere Fläche des grafischen Objekts eine freie Fläche der grafischen Bedienoberfläche gebildet wird, innerhalb derer der Informationsbereich dargestellt werden kann. Insbesondere wird in dem Informationsbereich eine als Text ausgegebene Information angezeigt. Alternativ oder zusätzlich können Symbole und/oder bildliche Darstellungen in dem Informationsbereich angezeigt werden.

Die in dem Informationsbereich angezeigten Elemente der Darstellung umfassen insbesondere keine Bedienmöglichkeiten, sondern lediglich Informationen, beispielsweise einen Text, der einen Nutzer über Bedienmöglichkeiten informiert.

Der Informationsbereich wird dabei so dargestellt, dass er sich nicht über den Bereich der Rückseitendarstellung des grafischen Objekts erstreckt. Insbesondere wird der Informationsbereich an die Rückseitendarstellung angrenzend gebildet, beispielsweise seitlich angrenzend. Der Informationsbereich kann dabei in Abhängigkeit von verschiedenen Parameter gebildet werden, beispielsweise in Abhängigkeit von der Identität des Nutzers, von dem grafischen Objekt, dessen Rückseitendarstellung in der zweiten Darstellung dargestellt wird, oder von einem Status des Bediensystems, beispielsweise einem aktuell ausgeführten Programm oder einer Fahrsituation eines Fahrzeugs.

Bei einer Ausbildung des erfindungsgemäßen Verfahrens umfasst die Bedienaktion eine Tippgeste auf einer berührungsempfindlichen Oberfläche. Dadurch kann vorteilhafterweise eine besonders einfache Bedienung ermöglicht werden.

Eine "Tippgeste" umfasst dabei eine Berührung der berührungsempfindlichen Oberfläche an einer bestimmten Position, die einem Ort der angezeigten grafischen Bedienoberfläche zugeordnet werden kann. Im Gegensatz zu einer "Wischgeste" ist dabei vorgesehen, dass sich die Position während der Dauer der Berührung im Wesentlichen nicht ändert.

Dabei wird insbesondere bestimmt, ob der zugeordnete Ort der angezeigten grafischen Bedienoberfläche einem dargestellten grafischen Objekt oder einem Element der Bedienoberfläche entspricht, das dem grafischen Objekt zugeordnet ist. Beispielsweise kann bestimmt werden, ob die Berührung am Ort einer Schaltfläche oder eines Bedienelements des grafischen Objekts oder am Ort eines anderen dem grafischen Objekt zugeordneten Bereichs erfasst wird.

Unter einer "Schaltfläche" wird im Sinne der Erfindung ein Steuerelement einer graphischen Benutzerschnittstelle verstanden. Eine Schaltfläche unterscheidet sich von Elementen und Flächen zur reinen Informationsanzeige, sogenannten Anzeigeelementen beziehungsweise Anzeigeflächen, darin, dass sie auswählbar ist. Bei einer Auswahl einer Schaltfläche wird eine zugeordnete Funktion ausgeführt. Die Funktion kann etwa zu einer Veränderung der Informationsanzeige führen. Ferner können über die Schaltfläche Einrichtungen gesteuert werden, deren Bedienung von der Informationsanzeige unterstützt wird. Die Schaltfläche kann somit einen herkömmlichen mechanischen Schalter ersetzen. Sie kann beliebig für eine frei programmierbare Anzeigefläche erzeugt und von dieser angezeigt werden.

Insbesondere wird eine Zeitdauer der erfassten Berührung bestimmt, wobei das Zeitintervall zwischen dem Beginn und dem Lösen der Berührung bestimmt wird. Dabei kann zumindest ein Schwellenwert definiert sein, der eine untere und/oder obere Grenze für die Zeitdauer der als Bedienaktion erfassten Berührung angibt.

Die Dauer der Berührung kann anschließend bei der Auswertung der erfassten Bedienaktion berücksichtigt werden, beispielsweise um zwischen einem kurzen Antippen und einem sogenannten "*Longpress",* bei dem eine länger andauernde Berührung der berührungsempfindlichen Oberfläche erfasst wird, zu unterscheiden. Dadurch können vorteilhafterweise anhand verschieden langer Berührungsdauern unterschiedliche Bedienaktionen unterschieden werden.

Ferner kann berücksichtigt werden, ob die Tippgeste mit einem bestimmten Betätigungsobjekt, insbesondere mit einem einzelnen, zwei oder mehr Fingern, durchgeführt wurde. Ferner können Gesten erfasst werden, wobei sich die Position der Berührung mit der Zeit ändert und auf diese Weise ein Bewegungsablauf von einer Startposition zu einer Endposition definiert wird, beispielsweise bei einer Wischgeste oder anderen Gesten.

In weiteren Ausführungsbeispielen kann die Bedienaktion alternativ oder zusätzlich mittels eines Touchpads, einer Maus, eines Dreh-Drück-Stellers, einer Tastatur, eines Schalters oder eines anderen Bedienelements erfasst werden.

Die Übergangsanimation, im Anschluss an welche die zweite Darstellung angezeigt wird, umfasst auf an sich bekannte Weise erzeugte aufeinander folgende Zwischenbilder, die zu einer Animation der Veränderung der Darstellung des grafischen Objekts führen. Die Übergangsanimation wird dabei insbesondere so erzeugt und angezeigt, dass ein Übergang von der ersten Darstellung mit der Vorderseitendarstellung zu der zweiten Darstellung mit der Rückseitendarstellung als eine Bewegung des flächigen grafischen Objekts in einem virtuellen Raum dargestellt wird.

Die Übergangsanimation umfasst dabei eine perspektivisch dargestellte Rotation um eine Achse, sodass ein Übergang von der Darstellung der Vorderseite zur Rückseite erreicht wird. Das heißt, es wird eine Rotation um eine Achse in der Ebene der Anzeigefläche dargestellt.

Bei einer Weiterbildung umfasst die Rückseitendarstellung in einer geordneten Liste angeordnete Schaltelemente. Anhand einer Betätigung eines Schaltelements wird eine Nutzereingabe erfasst. Dadurch kann vorteilhafterweise eine Auswahl eines Listeneintrags der Liste anhand des Schaltelements erfolgen.

Insbesondere können die Einträge der Liste, denen jeweils ein Schaltelement zugeordnet ist, Einstellungen des Bediensystems zugeordnet sein. Ferner können den Einträgen Programme, insbesondere Anwendungsprogramme, zugeordnet sein. Bei der Auswahl eines Listeneintrags kann die jeweilige Einstellung beziehungsweise das Programm ausgewählt und beispielsweise aktiviert oder gestartet werden.

Bei einer Weiterbildung wird ferner eine perspektivisch dargestellte Rückkehranimation für das grafische Objekt erzeugt und angezeigt. Im Anschluss an die Rückkehranimation wird eine in Abhängigkeit von dem ausgewählten Schaltelement veränderte Vorderseitendarstellung des grafischen Objekts angezeigt. Dadurch kann vorteilhafterweise eine Veränderung der Vorderseitendarstellung anhand der Auswahl erfolgen, wobei die zweite Darstellung zur Auswahl genutzt wird.

Die Rückkehranimation ist insbesondere analog zu der Übergangsanimation gebildet. Dabei kann die Rückkehranimation einer rückwärts ablaufenden Übergangsanimation entsprechen. Zum Beispiel kann, wenn die Übergangsanimation eine Rotation um eine Achse in eine erste Richtung umfasst, die Rückkehranimation eine Rotation in die entgegengesetzte Richtung um die gleiche Achse umfassen. Ferner kann vorgesehen sein, dass die Rückkehranimation als eine Fortsetzung der Übergangsanimationen gebildet wird, beispielsweise indem die Übergangsanimation eine Rotation um 180° um eine Achse und die Rückkehranimation eine Rotation um weitere 180° in die gleiche Richtung um die gleiche Achse umfasst. Ferner kann die Rückkehranimation auf andere Weise gebildet werden, beispielsweise durch eine Rotation um eine andere Achse.

Im Anschluss an die Rückkehranimation wird die Vorderseitendarstellung des grafischen Objekts angezeigt, die allerdings verändert ist in Abhängigkeit von einer Bedienhandlung, die bei der Anzeige der zweiten Darstellung mit der Rückseitendarstellung des grafischen Objekts erfasst wurde. Insbesondere wird die Vorderseitendarstellung nach Abschluss der Rückkehranimation in Abhängigkeit von dem bei der Rückseitendarstellung ausgewählten Schaltelement gebildet. Zum Beispiel kann eine dem Schaltelement zugeordnete Einstellung vorgenommen werden und die Vorderseitendarstellung entsprechend der Einstellung verändert werden.

Ferner kann allerdings auch vorgesehen sein, dass die Vorderseitendarstellung unverändert angezeigt wird, sodass nach Abschluss der Rückkehranimation eine Rückkehr zu der Vorderseitendarstellung des grafischen Objekts erfolgt, wie es vor der Anzeige der Übergangsanimation bereits angezeigt wurde.

Bei einer Ausbildung ist dem grafischen Objekt ein Anwendungsprogramm zugeordnet und durch die Vorderseitendarstellung des grafischen Objekts werden Ausgabedaten des zugeordneten Anwendungsprogramms angezeigt. Zudem kann anhand der zweiten Darstellung eine Auswahlaktion erfasst werden, wobei dem grafischen Objekt anhand der Auswahlaktion ein anderes Anwendungsprogramm zugeordnet wird. So kann vorteilhafterweise eine Konfiguration des grafischen Objekts zur Auswahl eines bestimmten angezeigten Anwendungsprogramms durchgeführt werden. Insbesondere wird die Rückseitendarstellung des grafischen Objekts genutzt, um die auf der Vorderseite dargestellten Informationen auszuwählen. Zum Beispiel kann anhand eines ausgewählten Schaltelements der Rückseitendarstellung ein bestimmtes Anwendungsprogramm gestartet und/oder dem grafischen Objekt zugeordnet werden, wobei nach der Rückkehranimation die Vorderseitendarstellung eine Ausgabe von Ausgabedaten des Anwendungsprogramms umfasst.

Bei einer weiteren Ausbildung verläuft die Achse der Rotation bei der Übergangsanimation und/oder der Rückkehranimation horizontal. Dadurch kann die Rotation vorteilhafterweise auf eine besonders einfache Weise vorgenommen werden. Bei einer weiteren Ausbildung verläuft die Achse vertikal.

Insbesondere verläuft die Achse durch die Mitte des grafischen Objekts, wobei bei einer horizontalen Achse das grafische Objekt in eine obere Hälfte und eine untere Hälfte geteilt wird. Die Achse der Rotation kann ferner dynamisch gebildet werden, das heißt, die Position der Achse in der Darstellung kann zeitlich veränderlich sein, beispielsweise durch ein Verschieben der Achse während der Rotation.

Bei einer Weiterbildung wird die Achse der Rotation bei der Übergangsanimation und/oder bei der Rückkehranimation während der Rotation in eine Richtung verschoben und gleichzeitig wird eine Rotation des grafischen Objekts erzeugt und angezeigt. Insbesondere kann dabei die Verschiebung der Achse linear mit der Drehung des grafischen Objekts synchronisiert sein. Während einer Drehung des grafischen Objekts von der Vorderseiten- zur Rückseitendarstellung verschiebt sich die Achse der Rotation insbesondere von einer Seite zu einer entgegengesetzten Seite des grafischen Objekts, etwa von links nach rechts. Insbesondere erfolgt die Verschiebung der Achse in eine Richtung senkrecht zur Erstreckungsrichtung der Rotationsachse, etwa in vertikaler Richtung bei einer horizontal verlaufenden Achse.

Die Animation der Drehung des grafischen Objekts setzt sich in diesem Fall aus zwei Transformationen zusammen: Erstens bewegt sich die Drehachse in eine Richtung, insbesondere in vertikaler Richtung, und zweitens wird eine Drehung des grafischen Objekts um diese Achse, insbesondere eine horizontale Achse, ausgeführt. Für die Art der Koppelung dieser beiden Bewegungen gibt es verschiedene Möglichkeiten. Insbesondere ist vorgesehen, dass eine vertikale Verschiebung einer horizontalen Achse bevorzugt linear mit der Drehung des grafischen Objekts synchronisiert ist.

Insbesondere kann vorgesehen sein, dass die Verschiebung der Achse der Rotation nicht mit konstanter Geschwindigkeit durchgeführt wird, sondern eine Phase mit einer Beschleunigung und eine Phase mit einer Verzögerung der Verschiebung gebildet wird. Auf diese Weise kann eine gleichmäßige Rotationsgeschwindigkeit für das grafische Objekt erzeugt werden, während die Achse verschoben wird.

Bei der erfindungsgemäßen Ausbildung umfasst die Übergangsanimation und/oder die Rückkehranimation ferner eine Verschiebung des grafischen Objekts in der Ebene der grafischen Bedienoberfläche. Dabei ist eine seitliche Verschiebung umfasst. Dadurch
kann vorteilhafterweise ein Übergang von der ersten zu der zweiten Darstellung so erzeugt werden, dass bei der Rückseitendarstellung, die eine geringere Fläche als die Vorderseitendarstellung einnimmt, eine Fläche zur Darstellung weiterer Objekte geschaffen wird.

Bei der Ausbildung der Erfindung wird bei der Übergangsanimation das grafische Objekt seitlich so verschoben, dass ein seitlicher Bereich entsteht, und in dem entstandenen seitlichen Bereich wird der Informationsbereich angezeigt. Dadurch wird vorteilhafterweise ein Raum für die Ausgabe weiterer Informationen in dem Informationsbereich geschaffen.

Die Verschiebung des grafischen Objekts beim Übergang von der ersten zu der zweiten

Darstellung beziehungsweise bei einer Rückkehranimation wird als seitliche Verschiebung ausgebildet. Die Verschiebung kann dabei als Translation entlang einer geraden Linie in eine bestimmte Richtung erfolgen oder die Animation kann einen ungeraden Verlauf für die Verschiebung vorsehen.

Bei einer Ausbildung umfasst die Übergangsanimation und/oder die Rückkehranimation eine perspektivisch dargestellte Vergrößerung und/oder Verringerung der Entfernung des grafischen Objekts in einer Richtung senkrecht zur Ebene der grafischen Bedienoberfläche. Dadurch kann vorteilhafterweise eine perspektivische Darstellung so erfolgen, dass eine Vergrößerung oder Verkleinerung der von dem grafischen Objekt eingenommenen Fläche anhand einer räumlich dargestellten Entfernung erzeugt wird.

Bei einer perspektivischen Darstellung führt eine Änderung des dargestellten Abstands des Betrachters zu dem grafischen Objekt zu einer Veränderung der Größe. Das grafische Objekt nimmt an Größe zu, wenn es in einem geringeren Abstand zum Betrachter dargestellt wird und nimmt an Größe ab, wenn es mit einem größeren Abstand dargestellt wird. Dies erlaubt eine Vergrößerung oder Verkleinerung durch Darstellen einer Abstandsänderung, insbesondere in eine Richtung senkrecht zur Ebene der grafischen Bedienoberfläche. Dabei kann die Darstellung auf an sich bekannte Weise nach Art eines "*Zooms"* erfolgen, wobei eine Vergrößerung und Verkleinerung anhand eines *"Zoom-Faktors"* dargestellt werden kann. Beispielsweise kann während der Übergangs- und/oder Rückkehranimation dargestellt werden, dass sich das grafische Objekt in eine Richtung senkrecht zur grafischen Bedienoberfläche bewegt, also typischerweise in eine Richtung von einem Betrachter der grafischen Bedienoberfläche weg (Heraus-Zoomen) beziehungsweise auf den Betrachter zu (Herein-Zoomen).

Beispielsweise kann vorgesehen sein, dass bei der Übergangsanimation ein kurzzeitiges Heraus-Zoomen und anschließendes Herein-Zoomen vorgenommen wird. Werden dabei verschiedene Zoom-Faktoren verwendet, so kann anhand der Differenz eine Vergrößerung oder Verkleinerung am Ende der Übergangsanimation stehen.

Beispielsweise kann das grafische Objekt bei der Übergangsanimation in einem ersten Schritt durch ein Heraus-Zoomen verkleinert werden, etwa mit einem ersten Zoom-Faktor, und in einem zweiten Schritt durch ein Herein-Zoomen vergrößert werden, etwa mit einem zweiten Zoomfaktor. Wenn der erste Zoom-Faktor zu einer stärkeren Verkleinerung führt, als der zweite Zoom-Faktor zu einer Vergrößerung des grafischen Objekts führt, resultiert daraus eine Verkleinerung. Die Rückkehranimation kann analog dazu erzeugt werden, beispielsweise mit dem umgekehrten Ablauf der Übergangsanimation, wobei die Zoom-Faktoren insbesondere so gebildet werden können, dass das grafische Objekt am Ende der Rückkehranimation wieder mit der ursprünglichen Größe der Vorderseitendarstellung angezeigt wird.

Insbesondere können für die Übergangsanimation und/oder die Rückkehranimation zumindest drei Bewegungsvorgänge gekoppelt werden, nämlich eine Rotation des grafischen Objekts um eine Achse, eine Verschiebung in eine Richtung parallel zur Ebene der Bedienoberfläche sowie eine Änderung der Entfernung in einer Richtung senkrecht zur Ebene der Bedienoberfläche, was wiederum zu einer Änderung der dargestellten Größe des grafischen Objekts führt. Diese drei Elemente der dargestellten Bewegung können auf verschiedene Weise miteinander verbunden und insbesondere so synchronisiert werden, dass zum Ende der Übergangsanimation die Rückseitendarstellung mit einer geringeren Fläche als bei der Vorderseitendarstellung ausgegeben wird beziehungsweise zum Ende der Rückkehranimation die Vorderseitendarstellung wieder erreicht wird.

Bei der erfindungsgemäßen Ausbildung umfasst die Übergangsanimation und/oder die Rückkehranimation ferner einen Lichteffekt, wobei ein Helligkeitsparameter des grafischen Objekts für die Dauer der Übergangsanimation beziehungsweise Rückkehranimation verändert wird. Dadurch kann vorteilhafterweise die Darstellung durch einen Lichteffekt unterstützt werden. Der Helligkeitsparameter umfasst eine dargestellte Helligkeit des grafischen Objekts. Ferner können weitere Elemente der grafischen Bedienoberfläche eine Helligkeit aufweisen.

Es ist vorgesehen, dass die Übergangsanimation in einer ersten Phase eine Verringerung der dargestellten Helligkeit des grafischen Objekts und in einer zweiten Phase eine Vergrößerung der Helligkeit umfasst. Alternativ wird umgekehrt zunächst eine Vergrößerung
und anschließend eine Verkleinerung der Helligkeit vorgesehen.

Bei einer weiteren Ausbildung kann vorgesehen sein, dass der Lichteffekt nicht oder nicht nur für die Dauer der Übergangsanimation erzeugt wird, sondern dass eine Veränderung des Helligkeitsparameter des grafischen Objekts bei der zweiten Darstellung gegenüber der ersten Darstellung verändern wird.

Alternativ oder zusätzlich kann eine Veränderung der Helligkeit weiterer Elemente der grafischen Bedienoberfläche vorgesehen sein. Beispielsweise kann bei der ersten Darstellung eine gleichmäßige Helligkeit der grafischen Bedienoberfläche gebildet werden, während bei der zweiten Darstellung die Rückseitendarstellung des grafischen Objekts hervorgehoben wird, indem die Helligkeit der restlichen grafischen Bedienoberfläche verringert wird und/oder die Rückseitendarstellung daher durch größere Helligkeit hervorgehoben wird.

Der Lichteffekt kann auf andere an sich bekannte Weisen gebildet werden und weitere Parameter umfassen, beispielsweise einen Farbparameter.

Bei einer Weiterbildung wird die Übergangsanimation von der ersten Darstellung zu der zweiten Darstellung mit einer Zeitdauer von 0,1 bis 0,5 Sekunden angezeigt. Ferner kann die Rückkehranimation mit einer Zeitdauer von 0,1 bis 0,5 Sekunden oder mit der gleichen Zeitdauer wie die Übergangsanimation angezeigt werden. Dadurch kann vorteilhafterweise ein und gut erfassbar Übergang dargestellt werden.

Die Zeitdauer, mit welcher die Animationen dargestellt werden, sowie die Dynamik des Ablaufs der dargestellten Animation können fest vorgegeben sein oder variabel sein, beispielsweise in Abhängigkeit von einer Fahrzeuggeschwindigkeit. Auf diese Weise kann berücksichtigt werden, wenn beispielsweise bei einer höheren Fahrzeuggeschwindigkeit ein schneller Übergang dargestellt werden soll, um die Aufmerksamkeit eines Nutzers möglichst kurz in Anspruch zu nehmen.

Das erfindungsgemäße Bediensystem ist dadurch gekennzeichnet, dass die zweite Darstellung ferner einen Informationsbereich umfasst und während der Übergangsanimation die Darstellung des grafischen Objekts verkleinerbar ist.

Das erfindungsgemäße Bediensystem ist insbesondere ausgebildet, das vorstehend beschriebene erfindungsgemäße Verfahren zu implementieren. Das Bediensystem weist somit dieselben Vorteile auf wie das erfindungsgemäße Verfahren.

Bei einer Ausbildung des erfindungsgemäßen Bediensystems sind die Erfassungseinheit und die Anzeigefläche von einem Touchscreen umfasst. Dies erlaubt vorteilhafterweise einen besonders einfachen und kompakten Aufbau des Bediensystems.

Die Erfindung wird nun anhand von Ausführungsbeispielen mit Bezug zu den Zeichnungen erläutert.
- Figur 1: zeigt ein Ausführungsbeispiel des erfindungsgemäßen Bediensystems in einem Fahrzeug,
- Figuren 2A bis 2D: zeigen ein erstes Ausführungsbeispiel des erfindungsgemäßen Verfahrens,
- Figuren 3A bis 3D: zeigen ein zweites Ausführungsbeispiel des erfindungsgemäßen Verfahrens und
- Figuren 4A und 4B: zeigen ein drittes Ausführungsbeispiel des erfindungsgemäßen Verfahrens.

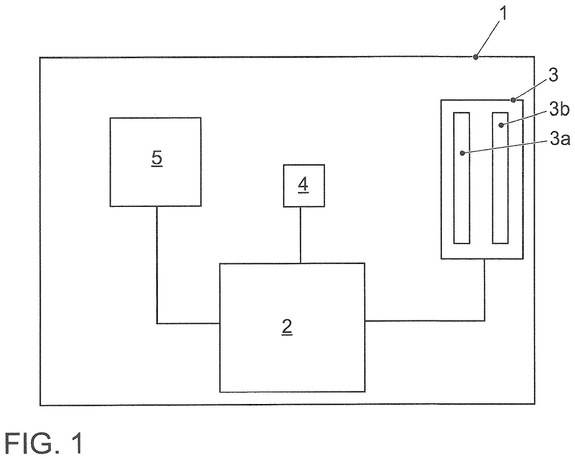

Mit Bezug zu Figur 1 wird ein Ausführungsbeispiel des erfindungsgemäßen Bediensystems in einem Fahrzeug erläutert.

Ein Fahrzeug 1 umfasst eine Steuereinheit 2, mit der ein Touchscreen 3, eine Erfassungseinheit 4 und eine Recheneinheit 5 gekoppelt sind. Die Erfassungseinheit 4 ist bei dem Ausführungsbeispiel als Dreh-Drück-Steller 4 gebildet. Touchscreen 3 umfasst eine berührungsempfindliche Oberfläche 3a, die ebenfalls als Erfassungseinheit 3a verwendet wird, sowie einer Anzeigefläche 3B. Dabei ist die berührungsempfindliche Oberfläche 3a als Touchfolie ausgebildet, die über der Anzeigefläche 3b angeordnet ist.

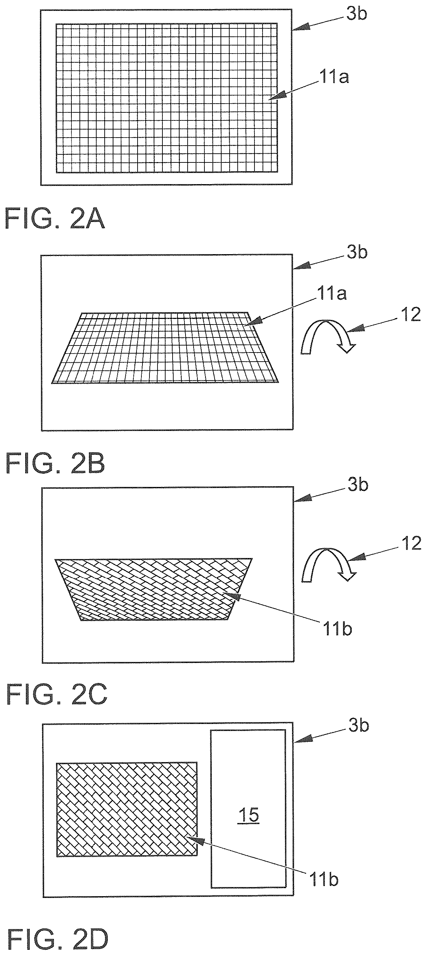

Mit Bezug zu den Figuren 2A bis 2D wird ein erstes Ausführungsbeispiel des erfindungsgemäßen Verfahrens erläutert. Dabei wird von dem oben mit Bezug zu Figur 1 erläuterten Ausführungsbeispiel des erfindungsgemäßen Bediensystems ausgegangen.

Bei dem Ausführungsbeispiel werden durch die Recheneinheit 5 Grafikdaten einer grafischen Bedienoberfläche erzeugt und durch die Steuereinheit 2 an den Touchscreen 3 übertragen, wo anhand der Grafikdaten eine Anzeige auf der Anzeigefläche 3b des Touchscreens 3 ausgegeben wird. Die Figuren 2A bis 2D zeigen die Anzeigefläche 3b mit der Ausgabe der grafischen Bedienoberfläche.

Bei dem in Figur 2A dargestellten Fall umfasst die auf der Anzeigefläche 3b ausgegebene grafische Bedienoberfläche eine Vorderseitendarstellung 11a eines grafischen Objekts, wobei zur deutlicheren Erkennbarkeit die Anzeigefläche 3b nicht vollständig ausgefüllt wird. In weiteren Ausführungsbeispiel kann die Vorderseitendarstellung 11a die vollständige Anzeigefläche 3b ausfüllen oder die grafische Bedienoberfläche kann mehrere grafische Objekte umfassen, insbesondere mehrere grafische Objekte, die nach Art des in Figur 2A dargestellten Grafikobjekts gebildet sind.

Das grafische Objekt wird als Ansicht eines flächigen virtuellen Objekts dargestellt, das heißt, es weist eine Vorderseite und eine Rückseite auf, wobei die Dicke des grafischen Objekts praktisch nicht ausgebildet ist. In den Figuren ist das grafische Objekt beispielhaft und schematisch als Rechteck dargestellt. Dabei ist eine Vorderseitendarstellung 11a vorgesehen, bei der eine frontale Draufsicht auf die Vorderseite des flächigen grafischen Objekts dargestellt wird. Ferner ist eine Rückseitendarstellung 11b vorgesehen, bei der die Rückseite des grafischen Objekts frontal dargestellt wird.

In dem Ausführungsbeispiel ist vorgesehen, dass durch die Vorderseitendarstellung 11a Ausgabedaten eines durch die Recheneinheit 5 ausgeführt Anwendungsprogramms ausgegeben werden. Diese Ausgabe erfolgt auf an sich bekannte Weise, wobei die Vorderseitendarstellung 11a im Sinne eines üblichen Anzeigefensters oder Widget-Objekts verwendet wird. Insbesondere sind im Bereich der Vorderseitendarstellung 11a grafische Elemente vorgesehen, die einer Informationsanzeige und/oder einer Bedienung durch einen Nutzer dienen.

Insbesondere umfasst die Vorderseitendarstellung 11a Schaltflächen, durch die Eingaben eines Nutzers erfassbar sind. Dazu wird vor allem die berührungsempfindliche Oberfläche 3a des Touchscreens 3 und/oder der Dreh-Drück-Steller 4 verwendet, wobei die Erfassung selbst auf an sich bekannte Weise erfolgt. Insbesondere wird dabei eine Bedienaktion erfasst, durch die ein Wechsel zu einer Rückseitendarstellung 11b des grafischen Objekts ausgelöst wird, wobei eine Übergangsanimation ausgegeben wird. Die Bedienaktion kann beispielsweise eine Betätigung eines Bedienelements oder eine Auswahl einer Schaltfläche der grafischen Bedienoberfläche umfassen. Alternativ oder zusätzlich kann durch die berührungsempfindliche Oberfläche 3 eine Geste erfasst werden, zum Beispiel eine "*Longpress*"-Geste, bei der etwa eine Berührung im Bereich der Vorderseitendarstellung 11a über ein bestimmtes Zeitintervall erfasst wird, eine Geste mittels mehrerer Finger und/oder eine Wischgeste mit einem bestimmten Bewegungsverlauf oder in einem bestimmten Bereich der berührungsempfindlichen Oberfläche.

Die Darstellung mit der Rückseitendarstellung 11b des grafischen Objekts ist in Figur 2D gezeigt, einzelne Schritte der Übergangsanimation in den Figuren 2B und 2C. Ein Pfeil 12 deutet eine Darstellung einer Rotation des dargestellten grafischen Objekts um eine horizontale, in der Mitte der Anzeigefläche 3b angeordnete Achse an.

Ausgehend von der in Figur 2A dargestellten Vorderseitendarstellung 11a des grafischen Objekts auf der Anzeigefläche 3b wird bei der Übergangsanimation eine Rotation des dargestellten virtuellen flächigen grafischen Objekts dargestellt. In Figur 2B ist dabei eine perspektivische Ansicht der Vorderseite des in Rotation befindlichen grafischen Objekts mit der Vorderseitendarstellung 11a sichtbar, während bei dem in Figur 2C dargestellten Fall einer weiter fortgeschrittenen Rotation bereits eine perspektivische Ansicht der Rückseite mit der Rückseitendarstellung 11b sichtbar wird.

Bei dem in Figur 2D dargestellten Fall ist eine Rotation um 180° abgeschlossen und die Darstellung umfasst eine frontale Ansicht der Rückseite des grafischen Objekts mit der Rückseitendarstellung 11b. Die Anzeige umfasst nach dem Ende der Übergangsanimation einen Informationsbereich 15, der seitlich rechts neben der Rückseitendarstellung 11b des grafischen Objekts dargestellt wird. Dabei nimmt die Rückseitendarstellung 11b bei der in Figur 2D dargestellten Anzeige eine geringere Fläche ein als die Vorderseitendarstellung 11a in Figur 2A, das grafische Objekt ist also im Vergleich zu dem in Figur 2A dargestellten Fall verkleinert.

Die Übergangsanimation wird bei dem Ausführungsbeispiel so erzeugt und ausgegeben, dass bei dem Übergang von der frontalen Ansicht der Vorderseitendarstellung 11a des grafischen Objekts zu der frontalen Ansicht der Rückseitendarstellung 11b neben der Rotation um die horizontale mittige Achse eine Verkleinerung des grafischen Objekts und eine Verschiebung nach links bewirkt wird, sodass seitlich rechts neben dem grafischen Objekt der Informationsbereich 15 angezeigt werden kann. Bei dem Ausführungsbeispiel ist dabei vorgesehen, dass eine Bewegung des grafischen Objekts vom Betrachter weg dargestellt wird, das heißt in eine Richtung senkrecht zur Ebene der grafischen Bedienoberfläche "in die Anzeigefläche hinein", sodass eine perspektivische Verkleinerung erfolgt. Gleichzeitig wird eine Verschiebung des grafischen Objekts nach links dargestellt, sodass seitlich rechts eine freie Fläche für den Informationsbereich 15 entsteht.

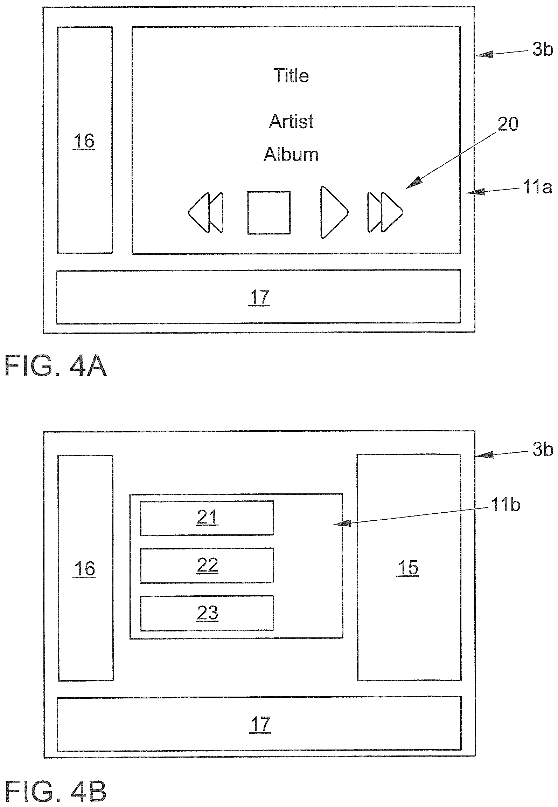

Bei dem Ausführungsbeispiel ist vorgesehen, dass im Bereich der Rückseitendarstellung 11b des grafischen Objekts Schaltflächen angezeigt werden, die verschiedenen Anwendungsprogrammen zugeordnet sind. Es wird eine Betätigung einer Schaltfläche erfasst und das der betätigten Schaltfläche zugeordnete Anwendungsprogramm wird aktiviert und der Schaltfläche zugeordneten. Von dem Anwendungsprogramm erzeugte Ausgabedaten werden nun angezeigt, wenn die Vorderseitendarstellung 11a des grafischen Objekts dargestellt wird. Dabei umfasst bei dem Ausführungsbeispiel der Informationsbereich 15 als Text dargestellte Informationen darüber, welche Programme anhand der Rückseitendarstellung 11b auswählbar sind. Dieser Teil des Ausführungsbeispiels des erfindungsgemäßen Verfahrens ist unten mit Bezug zu den Figuren 4A und 4B näher erläutert.

Die Übergangsanimation kann ferner so gebildet sein, dass ein Erscheinen des Informationsbereichs 15 dargestellt wird, beispielsweise durch ein schrittweises Einblenden, eine Bewegung dem Informationsbereich 15 zugeordneter grafische Objekte von außen in den Anzeigebereich hinein oder auf andere an sich bekannte Weise, wobei perspektivische Effekte genutzt werden können.

Bei dem Ausführungsbeispiel ist ferner einen Lichteffekt vorgesehen, der bei der Übergangsanimation dargestellt wird. Dabei wird ein Helligkeitsparameter des grafischen Objekts für die Dauer der Übergangsanimation verändert. Dabei wird die
Helligkeit des grafischen Objekts zunächst verringert und anschließend erhöht, sodass die Rückseitendarstellung 11b bei dem in Figur 2D dargestellten Fall eine Helligkeit aufweisen, die der Helligkeit der Vorderseitendarstellung 11a in Figur 2A entspricht.

In weiteren nicht beanspruchten Ausführungsbeispielen können andere Lichteffekte vorgesehen sein, beispielsweise
durch eine verringerte Helligkeit weiterer grafischer Objekte der Darstellung, sodass die Rückseitendarstellung 11b des grafischen Objekts und der Informationsbereich 15 relativ zu anderen Elementen der Darstellung heller ausgegeben werden. In weiteren Ausführungsbeispielen können Helligkeitseffekte auf andere Weise gebildet werden, insbesondere um eine Hervorhebung des grafischen Objekts zu erzielen. Alternativ oder zusätzlich zu dem Helligkeitseffekt kann der dargestellt Lichteffekt auch weitere Parameter betreffen, beispielsweise eine farbliche Veränderung, eine dynamische Darstellung, etwa durch Blinken, oder eine Veränderung des Kontrastes. Ferner kann der Lichteffekt für die Dauer der Darstellung in der Animation erzeugt werden und/oder auf die Darstellung des grafischen Objekts, insbesondere der Rückseitendarstellung 11b, dauerhaft angewandt werden.

Bei dem Ausführungsbeispiel ist zudem vorgesehen, dass bei dem in Figur 2D dargestellten Fall eine Nutzereingabe erfasst wird und anschließend eine perspektivisch dargestellte Rückkehranimation für das grafische Objekt erzeugt und angezeigt wird, wobei ein Übergang von der Rückseitendarstellung 11b zu einer Vorderseitendarstellung 11a des grafischen Objekts dargestellt wird. Bei dem Ausführungsbeispiel wird die Rückkehranimation so gebildet, dass sie im Wesentlichen einem umgekehrten Ablauf der Übergangsanimation übereinstimmt. Das heißt, die Rotation, die dargestellte Veränderung der Entfernung und der Helligkeitseffekt werden "rückwärts" angezeigt. Insbesondere ist vorgesehen, dass die Übergangsanimation eine Rotation von 0° bis 180° umfasst, während die Rückkehranimation eine Rotation von 180° bis 0° umfasst.

Bei weiteren Ausführungsbeispiel ist vorgesehen, dass die Rückkehranimation einer Fortsetzung der Übergangsanimation entspricht, beispielsweise indem eine Rotation um 180° nicht umgekehrt wird, sondern bis zu 360° weitergeführt wird. In weiteren Ausführungsbeispielen kann zudem der Übergang von der Rückseitendarstellung 11b zur Vorderseitendarstellung 11a auf andere Weise erfolgen, zum Beispiel durch eine Rotation um eine andere Achse, beispielsweise eine vertikal ausgerichtete Achse. Ferner können andere Elemente der Darstellung oder Animation, etwa ein Helligkeitseffekt oder die dargestellte Entfernung relativ zur einen Betrachter auf andere Weise erzeugt werden.

Bei einem weiteren Ausführungsbeispiel ist vorgesehen, dass bei der Übergangsanimation die Achse der Rotation verschoben wird, während gleichzeitig das grafische Objekt rotiert. Dabei wird eine Verschiebung der Achse in eine Richtung dargestellt, die sich senkrecht zum Verlauf der Rotationsachse erstreckt. Verläuft etwa die Rotationsachse wie bei dem Ausführungsbeispiel horizontal, so kann vorgesehen sein, dass die Achse während der Rotation des grafischen Objekts in vertikaler Richtung verschoben wird. Auf diese Weise kann insbesondere die Rotation des grafischen Objekts als Kippbewegung dargestellt werden, sodass der Übergang von der Vorderseitendarstellung 11a zur Rückseitendarstellung 11b auf besonders elegante und schnell erfassbare Weise angezeigt wird.

Bei dem Ausführungsbeispiel weist die Übergangsanimation und entsprechend auch die Rückkehranimation eine Zeitdauer von 0,1 Sekunden auf. Bei weiteren Ausführungsbeispielen kann die Zeitdauer zwischen 0,1 und 0,5 Sekunden betragen. Bei weiteren Ausführungsbeispielen kann die Zeitdauer in Abhängigkeit von Parametern des Fahrzeugbetriebs gebildet werden, beispielsweise in Abhängigkeit von der Geschwindigkeit des Fahrzeugs 1. Insbesondere kann die Zeitdauer umso kürzer sein, je schneller sich das Fahrzeug 1 bewegt, und umso länger, je langsamer sich das Fahrzeug 1 bewegt.

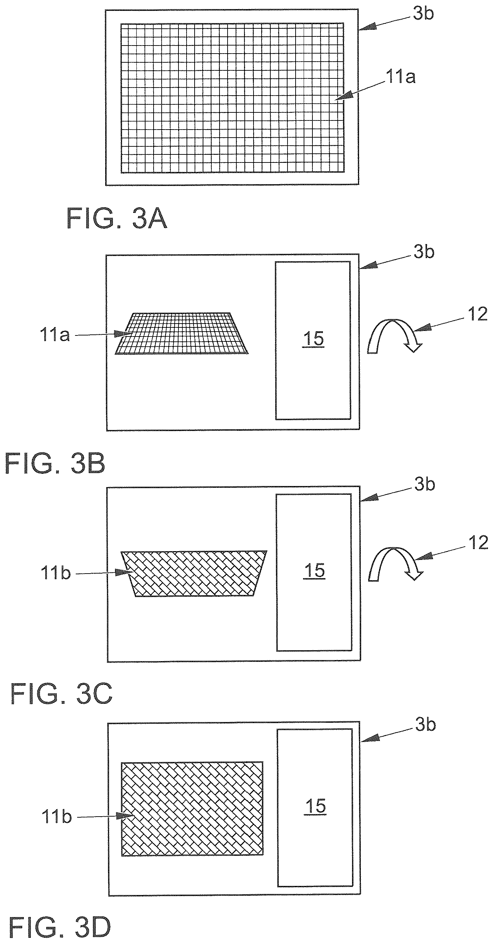

Mit Bezug zu den Figuren 3A bis 3D wird ein zweites Ausführungsbeispiel des erfindungsgemäßen Verfahrens erläutert. Dabei wird von dem oben mit Bezug zu Figur 1 erläuterten Ausführungsbeispiel des erfindungsgemäßen Bediensystems ausgegangen.

Die Erzeugung der Grafikdaten der grafischen Bedienoberfläche und ihre Anzeige auf der Anzeigefläche 3b erfolgt im Wesentlichen analog zu dem oben mit Bezug zu den Figuren 2A bis 2D erläuterten Ausführungsbeispiel des erfindungsgemäßen Verfahrens. Allerdings wird bei der Übergangsanimation, von der einige Teilschritte in den Figuren 3B und 3C dargestellt sind, zunächst ein Heraus-Zoomen und anschließend ein Herein-Zoomen für das grafische Objekt ausgegeben, wobei zunächst eine Vorderseitendarstellung 11a und nach der Übergangsanimation eine Rückseitendarstellung 11b des grafischen Objekts dargestellt wird. Die Übergangsanimation wird ferner so erzeugt, dass durch ein Verschieben des grafischen Objekts rechts seitlich neben dem grafischen Objekt eine freie Fläche entsteht, in der zum Ende der Übergangsanimation der Informationsbereich 15 angezeigt wird.

Dabei sind Einheiten einer virtuellen Entfernung des dargestellten flächigen grafischen Objekts definiert, wobei die virtuelle Entfernung entlang einer Richtung senkrecht zur Ebene der angezeigten grafischen Bedienoberfläche verläuft. Die Einheiten können dabei auf an sich bekannte Weise gebildet werden. Beispielsweise kann die Übergangsanimation so erzeugt werden, dass ein realer Abstand eines Objekts simuliert wird, wobei die Einheiten in diesem Fall tatsächlichen Längeneinheiten entsprechen. Alternativ können beliebige Einheiten vorgesehen sein als Parameter für die Erzeugung der Grafikdaten mit dem grafischen Objekt.

Bei der Übergangsanimation des Ausführungsbeispiels wird zunächst eine Verschiebung des grafischen Objekts um 300 beliebige Einheiten in eine Richtung weg vom Betrachter in die Ebene der grafischen Bedienoberfläche hinein dargestellt, während anschließend eine Annäherung um 50 beliebige Einheiten in die umgekehrte Richtung, das heißt auf den Betrachter zu, dargestellt wird. Das heißt, das grafische Objekt wird zunächst verkleinert und dann wieder vergrößert, wobei nach Ablauf von 50 % der Übergangsanimation eine Verkleinerung der von dem grafischen Objekt der zweiten Darstellung eingenommenen Fläche resultiert.

In weiteren Ausführungsbeispielen kann statt Einheiten des Abstands ein Zoom-Faktor verwendet werden, um die dargestellte Größe des grafischen Objekts und/oder seinen virtuellen Abstand von der Ebene der grafischen Bedienoberfläche zu parametrisieren. Dabei kann der Zoom-Faktor insbesondere ein Abbildungsmaßstab sein. Beispielsweise kann der Zoom-Faktor bei dem in Figur 3B dargestellten Fall so gewählt sein, dass eine Verkleinerung des grafischen Objekts verglichen mit der in Figur 3A dargestellten Vorderseitendarstellung 11a um einen Faktor 0,5 vorgenommen wird, während der Zoom-Faktor bei dem in Figur 3C dargestellten Fall 0,7 und bei dem in Figur 3D dargestellten Fall der Rückseitendarstellung 11b 0,8 beträgt.

Das heißt, bei dem Ausführungsbeispiel umfasst die Übergangsanimation eine Zunahme und anschließende Abnahme der Entfernung des grafischen Objekts von der Ebene der grafischen Bedienoberfläche, wobei die Entfernung am Ende der Übergangsanimation (siehe Figur 3D) gegenüber dem Ausgangspunkt (siehe Figur 3A) vergrößert ist, sodass die Rückseitendarstellung 11b eine gegenüber der Vorderseitendarstellung 11a des grafischen Objekts verringerte Fläche einnimmt. Die auf diese Weise zur Verfügung stehende freie Fläche ist seitlich rechts neben der Rückseitenerstellung 11b angeordnet, da bei der Übergangsanimation ferner eine Verschiebung des grafischen Objekts nach seitlich links dargestellt wird. Der Informationsbereich 15 kann daher seitlich rechts dargestellt werden.

Bei dem Ausführungsbeispiel ist ferner vorgesehen, dass die Rückkehranimation als umgekehrter Ablauf der Übergangsanimation erzeugt und ausgegeben wird. Die Erzeugung erfolgt wie oben mit Bezug zu den Figuren 2A bis 2D beschrieben.

Bei weiteren Ausführungsbeispielen können andere Zoom-Faktoren beziehungsweise andere virtuelle Abstände verwendet werden.

Mit Bezug zu den Figuren 4A und 4B wird ein drittes Ausführungsbeispiel des erfindungsgemäßen Verfahrens erläutert. Dabei wird von dem oben mit Bezug zu Figur 1 erläuterten Ausführungsbeispiel des erfindungsgemäßen Bediensystems ausgegangen.

Die Erzeugung der Grafikdaten der grafischen Bedienoberfläche und ihre Anzeige auf der Anzeigefläche 3b erfolgt im Wesentlichen analog zu dem oben mit Bezug zu den Figuren 2A bis 2D sowie mit Bezug zu den Figuren 3A bis 3D erläuterten Ausführungsbeispielen des erfindungsgemäßen Verfahrens. Insbesondere ist vorgesehen, dass eine zu den oben erläuterten Fällen äquivalente Übergangsanimation zum Übergang von dem in Figur 4A dargestellten Fall zur Darstellung der Figur 4B erzeugt und angezeigt wird.

Die auf der Anzeigefläche 3b ausgegebene grafische Bedienoberfläche umfasst allerdings neben dem grafischen Objekt, welches in Figur 4A als Vorderseitendarstellung 11a und in Figur 4B als Rückseitendarstellung 11b dargestellt wird, weitere Anzeigebereiche 16, 17. Die grafische Bedienoberfläche kann in den Anzeigebereichen 16, 17 auf an sich bekannte Weise gebildet sein, insbesondere können hier grafische Elemente zur Ausgabe von Informationen und/oder zur Erfassung von Nutzereingaben vorgesehen sein.

In weiteren Ausführungsbeispielen können die weiteren Anzeigebereiche 16, 17 auf andere Weise angeordnet sein, beispielsweise an anderen Seiten. Ferner kann ein einzelner weiterer Anzeigebereich 16, 17 oder können mehrere Anzeigebereiche 16, 17 der grafischen Bedienoberfläche vorgesehen sein. Zudem kann in weiteren Ausführungsbeispielen vorgesehen sein, dass bei dem Übergang von dem in Figur 4A dargestellten Fall zu dem in Figur 4B dargestellten Fall die Anzeige bei den Anzeigebereichen 16, 17 verändert wird, beispielsweise um veränderte Informationen anzuzeigen und/oder veränderte Bedienmöglichkeiten bereitzustellen.

In weiteren Ausführungsbeispielen kann die grafische Bedienoberfläche, die auf der Anzeigefläche 3b ausgegeben wird, mehrere grafische Objekte umfassen, die gemäß dem erfindungsgemäßen Verfahren gebildet werden und also eine Vorderseitendarstellung 11 und eine Rückseitendarstellung 11b aufweisen. Insbesondere können diese grafischen Objekte auf an sich bekannter Art als Kacheln, Widget-Objekte oder Anzeigefenster gebildet werden. In weiteren Ausführungsbeispielen kann der in dem Informationsbereich 15 auf andere Weise gebildet werden, beispielsweise auf einer anderen Seite der Rückseitendarstellung 11b, als ganz oder teilweise um die Rückseitendarstellung 11b herum umlaufender Bereich oder als Anzeigefenster, welches frei positioniert werden kann.

Ferner ist bei diesem Ausführungsbeispiel vorgesehen, dass bei der in Figur 4A dargestellten Vorderseitendarstellung 11a des grafischen Objekts Ausgabedaten eines dem grafischen Objekt zugeordneten Anwendungsprogramms, hier beispielhaft eines Medienwiedergabeprogramms, angezeigt werden. In der Vorderseitendarstellung 11a werden hier Schaltflächen 20 ausgegeben, die eine Steuerung des zugeordneten Anwendungsprogramms ermöglichen, im dargestellten Beispiel eine Steuerung der Wiedergabe eine Mediendatei. Ferner werden Informationen über die Tätigkeit des Anwendungsprogramms ausgegeben; dargestellt ist in Figur 4A beispielhaft eine Angabe von Titel, Künstler und Album einer aktuell ausgegebenen Mediendatei.

Bei der in Figur 4B dargestellten Rückseitendarstellung 11a des grafischen Objekts ist vorgesehen, dass Schaltflächen 21, 22, 23 ausgegeben werden, die verschiedenen Anwendungsprogrammen zugeordnet sind. Der Nutzer kann eine Schaltfläche 21, 22, 23 betätigen und auf diese Weise dem grafischen Objekt das jeweilige Anwendungsprogramm zuordnen. Bei einer Rückkehr zur Vorderseitendarstellung 11a, die insbesondere automatisch nach dem Betätigen einer Schaltfläche 21, 22, 23 erfolgt, können dann die Ausgabedaten des neu zugeordneten Anwendungsprogramms angezeigt werden.

In weiteren Ausführungsbeispielen kann alternativ oder zusätzlich vorgesehen sein, dass den Schaltflächen 21, 22, 23 Einstellungen für das dem grafischen Objekt zugeordnete Anwendungsprogramm zugeordnet sind. Auch hier kann vorgesehen sein, dass automatisch mit der Betätigung einer Schaltfläche 21, 22, 23 die Rückkehranimation durchgeführt wird und bei der anschließenden Vorderseitendarstellung 11a die Ausgabedaten des Anwendungsprogramms entsprechend den neu vorgenommenen Einstellungen verändert werden.

### Bezugszeichenliste

- 1: Fahrzeug
- 2: Steuereinheit
- 3: Touchscreen
- 3a: Erfassungseinheit; berührungsempfindliche Oberfläche
- 3b: Anzeigefläche
- 4: Erfassungseinheit; Dreh-Drück-Steller
- 5: Recheneinheit
- 10: Darstellung
- 11a: Vorderseitendarstellung
- 11b: Rückseitendarstellung
- 12: Pfeil
- 15: Informationsbereich
- 16; 17: Anzeigebereich
- 20: Schaltflächen (Vorderseite)
- 21, 22, 23: Schaltflächen (Rückseite)

## Patentansprüche

1. Verfahren zum Betreiben eines Bediensystems in einem Fahrzeug, bei dem
eine grafische Bedienoberfläche erzeugt und angezeigt wird; wobei
die grafische Bedienoberfläche eine erste Darstellung mit einer Vorderseitendarstellung (11a) eines flächigen grafischen Objekts umfasst;
eine Bedienaktion für das grafische Objekt erfasst wird;
eine Übergangsanimation erzeugt und angezeigt wird; und
im Anschluss an die Übergangsanimation eine zweite Darstellung mit einer Rückseitendarstellung (11b) des grafischen Objekts angezeigt wird; wobei
die Übergangsanimation eine perspektivisch dargestellte Rotation des grafischen Objekts um eine Achse umfasst; und
die Rückseitendarstellung (11b) des grafischen Objekts eine geringere Fläche als die Vorderseitendarstellung (11a) einnimmt; wobei
während der Übergangsanimation die Darstellung des grafischen Objekts verkleinert wird; und
die zweite Darstellung ferner einen Informationsbereich (15) umfasst;
**dadurch gekennzeichnet, dass**
die Übergangsanimation ferner eine Verschiebung des grafischen Objekts in der Ebene der grafischen Bedienoberfläche umfasst, wobei
bei der Übergangsanimation das grafische Objekt in der Ebene der grafischen Bedienoberfläche seitlich so verschoben wird, dass ein seitlicher Bereich entsteht; und
in dem entstandenen seitlichen Bereich der Informationsbereich (15) angezeigt wird, wobei
die Übergangsanimation ferner einen Lichteffekt umfasst, wobei ein Helligkeitsparameter des grafischen Objekts für die Dauer der Übergangsanimation verändert wird,
wobei der Helligkeitsparameter eine dargestellte Helligkeit des grafischen Objekts umfasst und
wobei die Übergangsanimation in einer ersten Phase eine Verringerung der dargestellten Helligkeit des grafischen Objekts und in einer zweiten Phase eine Vergrößerung der Helligkeit umfasst oder, umgekehrt, zunächst eine Vergrößerung und anschließend eine Verkleinerung der Helligkeit umfasst.

2. Verfahren gemäß Anspruch 1,
**dadurch gekennzeichnet, dass**
die Bedienaktion eine Tippgeste auf einer berührungsempfindlichen Oberfläche (3a) umfasst.

3. Verfahren gemäß Anspruch 2,
**dadurch gekennzeichnet, dass**
bei der Auswertung der erfassten Bedienaktion die Dauer einer Berührung auf der berührungsempfindlichen Oberfläche (3a) berücksichtigt wird, wobei insbesondere zwischen einem kurzen Antippen und einem Longpress, bei dem eine länger andauernde Berührung der berührungsempfindlichen Oberfläche erfasst wird, unterschieden wird.

4. Verfahren gemäß einem der vorhergehenden Ansprüche,
**dadurch gekennzeichnet, dass**
die Rückseitendarstellung (11b) in einer geordneten Liste angeordnete Schaltelemente (21, 22, 23) umfasst; und
anhand einer Betätigung eines Schaltelements (21, 22, 23) eine Nutzereingabe erfasst wird.

5. Verfahren gemäß Anspruch 4,
**dadurch gekennzeichnet, dass**
ferner eine perspektivisch dargestellte Rückkehranimation für das grafische Objekt erzeugt und angezeigt wird; und
im Anschluss an die Rückkehranimation eine in Abhängigkeit von dem ausgewählten Schaltelement (21, 22, 23) veränderte Vorderseitendarstellung (11a) des grafischen Objekts angezeigt wird.

6. Verfahren gemäß einem der vorhergehenden Ansprüche,
**dadurch gekennzeichnet, dass**
dem grafischen Objekt ein Anwendungsprogramm zugeordnet ist; und
durch die Vorderseitendarstellung (11a) des grafischen Objekts Ausgabedaten des zugeordneten Anwendungsprogramms angezeigt werden.

7. Verfahren gemäß Anspruch 6,
**dadurch gekennzeichnet, dass**
anhand der zweiten Darstellung eine Auswahlaktion erfasst wird; wobei
dem grafischen Objekt anhand der Auswahlaktion ein anderes Anwendungsprogramm zugeordnet wird.

8. Verfahren gemäß einem der vorhergehenden Ansprüche,
**dadurch gekennzeichnet, dass**
die Achse der Rotation bei der Übergangsanimation horizontal verläuft.

9. Verfahren gemäß einem der vorhergehenden Ansprüche,
**dadurch gekennzeichnet, dass**
die Achse der Rotation bei der Übergangsanimation während der Rotation in eine Richtung verschoben wird und gleichzeitig eine Rotation des grafischen Objekts erzeugt und angezeigt wird.

10. Verfahren gemäß einem der vorhergehenden Ansprüche,
**dadurch gekennzeichnet, dass**
die Übergangsanimation von der ersten Darstellung zu der zweiten Darstellung mit einer Zeitdauer von 0,1 bis 0,5 Sekunden angezeigt wird.

11. Bediensystem in einem Fahrzeug mit
einer Steuereinheit (2), durch die eine grafische Bedienoberfläche erzeugbar ist; wobei
die grafische Bedienoberfläche eine erste Darstellung mit einer Vorderseitendarstellung (11a) eines flächigen grafischen Objekts umfasst;
einer Anzeigefläche (3b), durch welche die grafische Bedienoberfläche anzeigbar ist; und
einer Erfassungseinheit (3a; 4), durch die eine Bedienaktion für das grafische Objekt erfassbar ist; wobei
ferner eine Übergangsanimation erzeugbar und anzeigbar ist; wobei
im Anschluss an die Übergangsanimation eine zweite Darstellung mit einer Rückseitendarstellung (11b) des grafischen Objekts anzeigbar ist; wobei
die Übergangsanimation eine perspektivisch dargestellte Rotation des grafischen Objekts um eine Achse umfasst; und
die Rückseitendarstellung (11b) des grafischen Objekts eine geringere Fläche als die Vorderseitendarstellung (11a) einnimmt; wobei
die zweite Darstellung ferner einen Informationsbereich (15) umfasst; und
während der Übergangsanimation die Darstellung des grafischen Objekts verkleinerbar ist;
**dadurch gekennzeichnet, dass**
die Übergangsanimation ferner eine Verschiebung des grafischen Objekts in der Ebene der grafischen Bedienoberfläche umfasst, wobei
bei der Übergangsanimation das grafische Objekt in der Ebene der grafischen Bedienoberfläche seitlich so verschiebbar ist, dass ein seitlicher Bereich entsteht; und
in dem entstandenen seitlichen Bereich der Informationsbereich (15) anzeigbar ist, wobei
die Übergangsanimation ferner einen Lichteffekt umfasst, wobei ein Helligkeitsparameter des grafischen Objekts für die Dauer der Übergangsanimation veränderbar ist,
wobei die Übergangsanimation in einer ersten Phase eine Verringerung der dargestellten Helligkeit des grafischen Objekts und in einer zweiten Phase eine Vergrößerung der Helligkeit umfasst oder, umgekehrt, zunächst eine Vergrößerung und anschließend eine Verkleinerung der Helligkeit umfasst.

12. Bediensystem gemäß Anspruch 11,
**dadurch gekennzeichnet, dass**
die Erfassungseinheit (3b) und die Anzeigefläche (3a) von einem Touchscreen (3) umfasst sind.

## Claims

1. Method for operating an operating system in a vehicle, in which
a graphical user interface is generated and displayed; wherein
the graphical user interface comprises a first representation with a front-side representation (11a) of a planar graphic object;
an operating action for the graphic object is detected;
a transition animation is generated and displayed; and
following the transition animation, a second representation with a rear-side representation (11b) of the graphic object is displayed; wherein
the transition animation comprises a perspective representation of a rotation of the graphic object about an axis; and
the rear-side representation (11b) of the graphic object occupies a smaller area than the front-side representation (11a); wherein
during the transition animation, the representation of the graphical object is reduced in size; and
the second representation further comprises an information region (15);
**characterized in that**
the transition animation further comprises a displacement of the graphic object in the plane of the graphical user interface, wherein
during the transition animation, the graphical object is shifted laterally in the plane of the graphical user interface in such a way that a lateral region is created; and
the information region (15) is displayed in the resulting lateral region, wherein
the transition animation further comprises a light effect, wherein a brightness parameter of the graphic object is changed for the duration of the transition animation,
wherein the brightness parameter comprises a displayed brightness of the graphic object, and
wherein the transition animation in a first phase comprises a reduction in the displayed brightness of the graphic object and in a second phase an increase in brightness or, conversely, comprises first an increase and then a reduction in brightness.

2. Method according to Claim 1,
**characterized in that**
the operating action comprises a tapping gesture on a touch-sensitive surface (3a).

3. Method according to Claim 2,
**characterized in that**
the duration of a touch on the touch-sensitive surface (3a) is taken into account in the evaluation of the detected operating action, wherein a distinction is made in particular between a short tap and a long press, in which a longer-lasting touch on the touch-sensitive surface is detected.

4. Method according to any one of the preceding claims,
**characterized in that**
the rear-side representation (11b) comprises switch elements (21, 22, 23) arranged in an ordered list; and
a user input is detected on the basis of an operation of a switch element (21, 22, 23).

5. Method according to Claim 4,
**characterized in that**
a perspective representation of the return animation for the graphic object is also generated and displayed; and
following the return animation, a front-side representation (11a) of the graphic object that is changed as a function of the selected switch element (21, 22, 23) is displayed.

6. Method according to any one of the preceding claims,
**characterized in that**
an application program is associated with the graphic object; and
output data of the associated application program are displayed by the front-side representation (11a) of the graphic object.

7. Method according to Claim 6,
**characterized in that**
a selection action is detected on the basis of the second representation; wherein
a different application program is associated with the graphic object on the basis of the selection action.

8. Method according to any one of the preceding claims,
**characterized in that**
the axis of rotation runs horizontally in the transition animation.

9. Method according to any one of the preceding claims,
**characterized in that**
in the transition animation, the axis of rotation is shifted in one direction during the rotation and, at the same time, a rotation of the graphic object is generated and displayed.

10. Method according to any one of the preceding claims,
**characterized in that**
the transition animation from the first representation to the second representation is displayed with a duration of 0.1 to 0.5 seconds.

11. Operating system in a vehicle having
a control unit (2) via which a graphical user interface can be generated; wherein
the graphical user interface comprises a first representation with a front-side representation (11a) of a planar graphic object;
a display area (3b) via which the graphical user interface can be displayed; and
a detection unit (3a; 4) via which an operating action for the graphic object can be detected; wherein
a transition animation can also be generated and displayed; wherein
following the transition animation, a second representation with a rear-side representation (11b) of the graphic object can be displayed; wherein
the transition animation comprises a perspective representation of a rotation of the graphic object about an axis; and
the rear-side representation (11b) of the graphic object occupies a smaller area than the front-side representation (11a); wherein
the second representation further comprises an information region (15); and
the representation of the graphic object can be reduced in size during the transition animation;
**characterized in that**
the transition animation further comprises a displacement of the graphic object in the plane of the graphical user interface, wherein
during the transition animation, the graphic object can be shifted laterally in the plane of the graphical user interface in such a way that a lateral region is created; and
the information region (15) can be displayed in the resulting lateral region, wherein
the transition animation further comprises a light effect, wherein a brightness parameter of the graphic object can be changed for the duration of the transition animation,
wherein the transition animation in a first phase comprises a reduction in the displayed brightness of the graphic object and in a second phase an increase in brightness or, conversely, comprises first an increase and then a reduction in brightness.

12. Operating system according to Claim 11,
**characterized in that**
the detection unit (3b) and the display area (3a) are encompassed by a touchscreen (3).

## Revendications

1. Procédé de fonctionnement d'un système de commande utilisateur dans un véhicule, dans lequel
une interface utilisateur graphique est générée et affichée ; dans lequel
l'interface utilisateur graphique comprend une première représentation avec une représentation de face avant (11a) d'un objet graphique plan ;
une action d'utilisateur pour l'objet graphique est détectée ;
une animation de transition est générée et affichée ; et
après l'animation de transition, une seconde représentation avec une représentation de face arrière (11b) de l'objet graphique est affichée ; dans lequel
l'animation de transition comprend une rotation représentée en perspective de l'objet graphique sur un axe ; et
la représentation de face arrière (11b) de l'objet graphique occupe une surface plus petite que la représentation de face avant (11a) ; dans lequel
la représentation de l'objet graphique est réduite pendant l'animation de transition ; et
la seconde représentation comprend en outre une zone d'information (15) ;
**caractérisé en ce que**
l'animation de transition comprend en outre un déplacement de l'objet graphique dans le plan de l'interface utilisateur graphique, dans lequel
lors de l'animation de transition, l'objet graphique est déplacé latéralement dans le plan de l'interface utilisateur graphique de telle manière qu'une zone latérale est créée ; et
la zone d'information (15) est affichée dans la zone latérale créée, dans lequel
l'animation de transition comprend en outre un effet lumineux, un paramètre de luminosité de l'objet graphique étant modifié pour la durée de l'animation de transition,
dans lequel le paramètre de luminosité comprend une luminosité représentée de l'objet graphique et
dans lequel l'animation de transition comprend, dans une première phase, une diminution de la luminosité représentée de l'objet graphique et, dans une seconde phase, une augmentation de la luminosité ou comprend inversement d'abord une augmentation puis une diminution de la luminosité.

2. Procédé selon la revendication 1,
**caractérisé en ce que**
l'action d'utilisateur comprend un geste d'appui sur une surface sensible au toucher (3a).

3. Procédé selon la revendication 2,
**caractérisé en ce que**
lors de l'évaluation de l'action d'utilisateur détectée, la durée d'un toucher sur la surface sensible au toucher (3a) est prise en compte, dans lequel une différentiation est en particulier faite entre une pression courte et une pression prolongée, pour laquelle un toucher de plus longue durée de la surface sensible au toucher est détecté.

4. Procédé selon l'une quelconque des revendications précédentes,
**caractérisé en ce que**
la représentation de face arrière (11b) comprend des éléments de commutation (21, 22, 23) disposés en une liste ordonnée ; et
une saisie de l'utilisateur est détectée au moyen d'un actionnement d'un élément de commutation (21, 22, 23).

5. Procédé selon la revendication 4,
**caractérisé en ce que**
une animation de retour représentée en perspective pour l'objet graphique est en outre générée et affichée ; et
après l'animation de retour, une représentation de face avant (11a) de l'objet graphique modifiée en fonction de l'élément de commutation (21, 22, 23) sélectionné est affichée.

6. Procédé selon l'une quelconque des revendications précédentes,
**caractérisé en ce que**
un programme d'application est associé à l'objet graphique ; et
des données de sortie du programme d'application associé sont affichées par la représentation de face avant (11a) de l'objet graphique.

7. Procédé selon la revendication 6,
**caractérisé en ce que**
une action de sélection est détectée à l'aide de la seconde représentation ; dans lequel
un autre programme d'application est associé à l'objet graphique à l'aide de l'action de sélection.

8. Procédé selon l'une quelconque des revendications précédentes,
**caractérisé en ce que**
l'axe de rotation pour l'animation de transition s'étend horizontalement.

9. Procédé selon l'une quelconque des revendications précédentes,
**caractérisé en ce que**
l'axe de rotation pour l'animation de transition est déplacé dans une direction pendant la rotation et simultanément une rotation de l'objet graphique est générée et affichée.

10. Procédé selon l'une quelconque des revendications précédentes,
**caractérisé en ce que**
l'animation de transition de la première représentation à la seconde représentation est affichée pour une durée de 0,1 à 0,5 secondes.

11. Système de commande utilisateur dans un véhicule, comprenant
une unité de commande (2) permettant de générer une interface utilisateur graphique ; dans lequel
l'interface utilisateur graphique comprend une première représentation avec une représentation de face avant (11a) d'un objet graphique plan ;
une surface d'affichage (3b) permettant d'afficher l'interface utilisateur graphique ; et
une unité de détection (3a ; 4) permettant de détecter une action d'utilisateur pour l'objet graphique ; dans lequel
une animation de transition peut en outre être générée et affichée ; dans lequel
après l'animation de transition, une seconde représentation avec une représentation de face arrière (11b) de l'objet graphique peut être affichée ; dans lequel
l'animation de transition comprend une rotation représentée en perspective de l'objet graphique sur un axe ; et
la représentation de face arrière (11b) de l'objet graphique occupe une surface plus petite que la représentation de face avant (11a) ; dans lequel
la seconde représentation comprend en outre une zone d'information (15) ; et
la représentation de l'objet graphique peut être réduite pendant l'animation de transition ;
**caractérisé en ce que**
l'animation de transition comprend en outre un déplacement de l'objet graphique dans le plan de l'interface utilisateur graphique, dans lequel
lors de l'animation de transition, l'objet graphique peut être déplacé latéralement dans le plan de l'interface utilisateur graphique de telle manière qu'une zone latérale est créée ; et
la zone d'information (15) peut être affichée dans la zone latérale créée, dans lequel
l'animation de transition comprend en outre un effet lumineux, dans lequel un paramètre de luminosité de l'objet graphique peut être modifié pour la durée de l'animation de transition,
dans lequel l'animation de transition comprend, dans une première phase, une diminution de la luminosité représentée de l'objet graphique et, dans une seconde phase, une augmentation de la luminosité ou comprend inversement d'abord une augmentation puis une diminution de la luminosité.

12. Système de commande utilisateur selon la revendication 11,
**caractérisé en ce que**
l'unité de détection (3b) et la surface d'affichage (3a) font partie d'un écran tactile (3).
